# EUROPEAN PATENT APPLICATION

(11) **EP 2 858 451 A1**
(43) Date of publication of application: **08.04.2015**
(21) Application number: 12877292.8
(22) Date of filing: 28.12.2012
(51) Int. Cl.: H04W 80/04, H04W 8/06, H04W 12/08, H04W 84/10, H04W 92/12

(54) **SERVICE CONTROL APPARATUS, RELAY APPARATUS, FEMTOCELL BASE STATION, COMMUNICATION SYSTEM, CONTROL METHOD, AND PROGRAM**

(30) Priority: 24.05.2012 JP 2012118700
(71) Applicant: NEC Corporation, Tokyo 108-8001 (JP)
(72) Inventor: MIYAGAWA, Yusuke, Tokyo 108-8001 (JP); KIDO, Takayuki, Tokyo 108-8001 (JP); AKIMOTO, Takuo, Tokyo 108-8001 (JP); NAKANISHI, Yuki, Tokyo 108-8001 (JP); WATANABE, Yasuhiro, Tokyo 108-0073 (JP)
(74) Representative: Betten & Resch
(86) International application number: PCT/JP2012/084094
(87) International publication number: WO 2013/175671

(57) **Abstract**

A service control apparatus provides a PS (Packet Switching) service to UE (User Equipment) that are present in a communication area created by a femtocell base station in an IMS (IP Multimedia Subsystem) network. The service control apparatus includes tunnel establishing means that establishes an IPsec (Security Architecture for Internet Protocol) tunnel with the femtocell base station; and service control means that, when there are requests for provision of the PS service from a plurality of the UE, provides the PS service to the plurality of UE by way of a common IPsec tunnel that was established by the tunnel establishing means.

## Description

### TECHNICAL FIELD

The present invention relates to a service control apparatus, a relay apparatus, a femtocell base station, a communication system, a control method, and a program.

### BACKGROUND OF INVENTION

Recently, in order to improve the quality of a communication area, a communication system in which femtocell base stations are adapted has been developed.

A femtocell base station is a compact wireless base station that covers a small communication area having radius on the order of several tens of meters. The adoption of a femtocell base station enables an improvement of communication quality in a communication area that an existing macrocell base station cannot cover. In addition, the adoption of a femtocell base station also enables the coverage of a communication area without incurring the costs of providing the infrastructure of a macrocell base station.

Recently, in order to realize an ALL-IP network, a communication system that is provided with an IMS (IP Multimedia subsystem) network has been also developed. For example, Patent Document 1 (WO 2010/073033 A1) discloses technology in which, in a communication system provided with a 3G network that performs communication by way of existing macrocell base stations and an IMS network in which a femtocell base station is adopted, a control means is provided between the femtocell base station and the 3G-network side for converting messages received from the femtocell base station to messages that can be recognized on the 3G-network side and converting messages received from the 3G-network side to messages that can be recognized in the femtocell base station. By means of this technology, a femtocell base station can be introduced into an IMS network without upgrading the existing 3G network.

### RELATED ART LITERATURE

### Patent Document

Patent Document 1: WO 2010/074033 A1

### SUMMARY

### Problem to be Solved by the Invention

An IMS network is principally directed to providing a circuit switching (CS) service to UE (User Equipment). In recent years, however, various methods are being investigated for providing a service that is the same as the packet switching (PS) service being provided in existing 3G networks in a communication system in which femtocell base stations are adopted in an IMS network. For example, a method is being investigated for applying in a femtocell base station the technology that is used when providing a PS service by means of an access point apparatus of a wireless LAN (Local Area Network). This method is prescribed in 3GPP TS 24.327 and is a method of establishing IPsec (Security Architecture for Internet Protocol) tunnels, in UE units, between an access point apparatus and a service control apparatus that controls the provision of a PS service.

In recent years, the number of terminals such as smartphones that establish constant packet sessions have been increasing. In a communication system in which femtocell base stations are adopted, establishing IPsec tunnels in UE units results in an increase of the number of IPsec tunnels that a femtocell base station must establish and an increase of the processing load of the femtocell base stations. Thus, a problem arises in which the number of UE that can simultaneously connect to a femtocell base station, which has lower processing capabilities than a macrocell base station, such as the number of IPsec tunnels that can be simultaneously established, is reduced.

An object of the present invention is to provide a service control apparatus, a relay apparatus, a femtocell base station, a communication system, a control method, and a program that can provide a PS service in an IMS network while suppressing an increase of load.

### Means for Solving the Problem

In order to achieve the above described object, a service control apparatus of the present invention is:
a service control apparatus that provides a PS (Packet Switching) service to UE (User Equipment) that are present in a communication area that is created by a femtocell base station in an IMS (IP Multimedia subsystem) network, comprising:
   tunnel-establishing means that establishes IPsec (Security Architecture for Internet Protocol) tunnels with the femtocell base station; and
   service control means that, when there are requests for provision of the PS service from a plurality of the UE, provides the PS service to the plurality of UE by way of a common IPsec tunnel that was established by the tunnel-establishing means.

In order to achieve the above described object, a relay apparatus of the present invention is:
a relay apparatus that relays messages between a femtocell base station that creates a communication area and a core side, comprising:
   tunnel-establishing means that establishes IPsec (Security Architecture for Internet Protocol) tunnels with the femtocell base station; and
   service control means that, when there are requests for the provision of a PS (Packet Switching) service from a plurality of UE (User Equipment) that is present within the communication area, provides the PS service to the plurality of UE by way of a common IPsec tunnel that was established with the femtocell base station by means of the tunnel-establishing means.

In order to achieve the above described object, a femtocell base station of the present invention is:
a femtocell base station that creates a communication area in an IMS (IP Multimedia subsystem) network, comprising:
   tunnel-establishing means that establishes IPsec tunnels with a service control apparatus that provides a PS (Packet Switching) service to UE (User Equipment) that is present within the communication area; and
   control means that, when there are requests for provision of the PS service from a plurality of the UE, transmits and receives messages that correspond to the provision of the PS service to the plurality of UE to and from the service control apparatus by way of a common IPsec tunnel that was established by the tunnel-establishing means.

In order to achieve the above described object, a communication system of the present invention is:
a communication system that makes up an IMS (IP Multimedia subsystem) network and that is equipped with a femtocell base station that creates a communication area and a service control apparatus that provides a PS (Packet Switching) service to UE (User Equipment) that is present within the communication area, wherein:
   the femtocell base station establishes IPsec tunnels between the femtocell base station and the service control apparatus; and
   the service control apparatus, when there are requests for provision of the PS service from a plurality of the UE, provides the PS service to the plurality of UE by way of a common IPsec tunnel.

In order to achieve the above described object, a control method of a service control apparatus of the present invention is:
a control method of a service control apparatus that provides a PS (Packet Switching) service to UE (User Equipment) that is present within a communication area created by a femtocell base station in an IMS (IP Multimedia subsystem) network, comprising:
   establishing IPsec (Security Architecture for Internet Protocol) tunnels with the femtocell base station; and
   when there are requests for provision of the PS service from a plurality of the UE, providing the PS service to the plurality of UE by way of a common IPsec tunnel.

In order to achieve the above described object, a control method of a femtocell base station of the present invention is:
a control method of a femtocell base station that creates a communication area in an IMS (IP Multimedia subsystem) network, comprising:
   establishing IPsec tunnels with a service control apparatus that provides a PS (Packet Switching) service to UE (User Equipment) that are present within the communication area; and
   when there are requests for provision of the PS service from a plurality of the UE, transmitting and receiving messages that are corresponding to the provision of the PS service to the plurality of UE to and from the service control apparatus by way of a common IPsec tunnel.

In order to achieve the above described object, a program of the present invention causes a computer to execute:
a process of establishing IPsec tunnels between a femtocell base station that creates a communication area in an IMS (IP Multimedia subsystem) network and a service control apparatus that provides a PS service to UE that is present within the communication area; and
a process of, when there are requests for provision of the PS service from a plurality of the UE, providing the PS service to the plurality of UE by way of a common IPsec tunnel.

According to the present invention, a PS service can be provided in an IMS network while suppressing an increase of load.

### BRIEF DESCRIPTION OF THE DRAWINGS

FIG. 1 shows the essential configuration of a communication system of an exemplary embodiment of the present invention.
FIG. 2 is a block diagram showing the essential configuration of the FAP shown in FIG. 1.
FIG. 3 is a block diagram showing the essential configuration of the PDG shown in FIG. 1.
FIG. 4 is a sequence diagram showing an operation when the power supply of the FAP is ON in the 3G-Femto network shown in FIG. 1.
FIG. 5 is a sequence diagram showing an operation at the time of registering the location of a CS service in the 3G-Femto network shown in FIG. 1.
FIG. 6 is a sequence diagram showing an operation at the time of CS call origination in the 3G-Femto network shown in FIG. 1.
FIG. 7 is a sequence diagram showing an operation at the time of registering the location of a PS service in the 3G-Femto network shown in FIG. 1.
FIG. 8 is a sequence diagram showing an operation at the time of PS call origination in a related communication system.
FIG. 9 is a sequence diagram showing an operation at the time of PS call origination in the 3G-Femto network shown in FIG. 1.
FIG. 10 shows another example of a configuration of the communication system of an exemplary embodiment of the present invention.

### EXEMPLARY EMBODIMENTS

Exemplary embodiments for carrying out the present invention are next described with reference to the accompanying drawings.

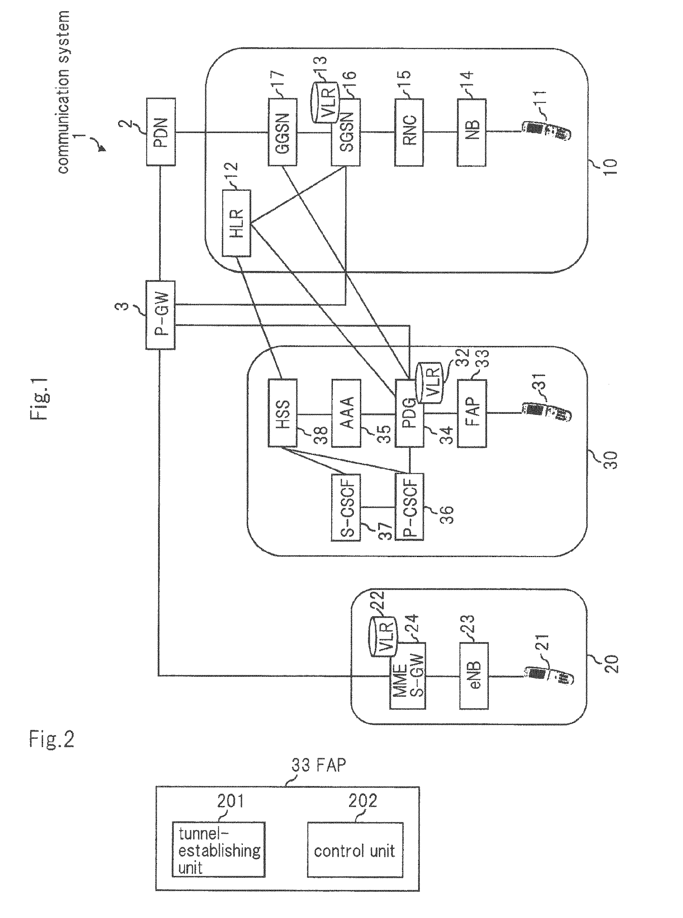

FIG. 1 shows the essential constituent elements of communication system 1 of an exemplary embodiment of the present invention.

Communication system 1 includes 3G network 10, LTE (Long Term Evolution) network 20, and 3G-Femto network 30. 3G network 10 is connected to PDN (Packet Data Network) 2, and LTE network 20 and 3G-Femto network 30 are connected to PDN 2 by way of P-GW (PDN Gateway) 3.

3G network 10 is an existing 3G network, and makes up a macrocell network. 3G network 10 includes UE (User Equipment) 11, HLR (Home Location Register) 12, VLR (Visitors Location Register) 13, NB (Node-B) 14, RNC (Radio Network Controller) 15, SGSN (Serving GPRS (General Packet Radio Service) Support Node) 16, and GGSN (Gateway GPRS Support Node) 17.

HLR 12 manages subscriber information such as portable telephone numbers and terminal identification information of UE.

VLR 13 stores subscriber information of UE 11 within 3G network 10.

NB 14 is a base station that creates a predetermined communication area.

RNC 15 controls a plurality of NB 14 and carries out, for example, call origination and incoming control, call ringing-off control, and handover control.

SGSN 16 uses subscriber information that is stored in VRL 15 to provide, for example, PS service to UE 11.

GGSN 17 carries out, for example, user authentication, connection control, and QoS (Quality of Service) control at the time of packet communication.

Since UE 11, HLR 12, VLR 13, NB 14, RNC 15, SGSN 16, and GGSN 17 are equipment that perform processing based on 3GPP, a specific processing operation example is omitted. The technologies used in the 3G network are disclosed in, for example, 3GPP TS 23.060.

LTE network 20 is an existing LTE network. LTE network 20 includes UE 21, VLR 22, eNB (evolved Node-B) 23, and MME S-GW (Mobility Management Entity Serving-Gateway) 24.

VLR 22 stores subscriber information of UE 21 within LTE network 20.

eNB 23 is a base station that creates a predetermined communication area.

MME S-GW 24 carries out mobility management such as location registration of UE 21, calling, and handover between eNB 23. In addition, MME S-GW 24 carries out relay processing of data to UE 21.

Since UE 21, VLR 22, eNB 23, and MME S-GW 24 are equipment that perform processing based on 3GPP, a specific processing operation example is omitted. The technologies used in the LTE network are disclosed in, for example, 3GPP TS 23.401.

3G-Femto network 30 includes UE 31, VLR 32, FAP (Femto Access Point) 33, PDG (Packet data Gateway) 34, AAA (Authentication Authorization Accounting) 35, P-CSCF (Proxy-Call Session Control Function) 36, S-CSCF (Serving-Call Session Control Function) 37, and HSS (Home Subscriber Server) 38.

VLR 32 stores subscriber information of UE 31 within 3G-Femto network 30.

FAP 33 is a small base station that creates a communication area of some tens meters in radius that is smaller than the communication area created by NB 13 or eNB 22. FAP 32 outputs messages that are correspond to requests from UE 31 within the communication area created by its own device to the host device side, and transmits to UE 31 messages that correspond to the messages that were received from the host device side.

PDG 34 relays messages between FAP 33 and the core side. In addition, in the present exemplary embodiment, PDG 34 is assumed to also operate as a service control apparatus that uses subscriber information that is stored in VLR 32 to provide services such as a PS service to UE 31. Accordingly, PDG 34 can also be considered virtually equivalent to SGSN.

AAA 35 carries out authentication processing between UE 31 and networks.

P-CSCF 36 and S-CSCF 37 carry out processes such as session control that use SIP (Session Initiation Protocol), management, authentication, and routing. More specifically, P-CSCF 36 carries out security control and control of SIP signals between UE 31 and P-CSCF 36. S-CSCF 37 carries out control of services that are provided to UE 31 and control of SIP signals.

HSS 38 acquires subscriber information from HLR 12 and manages it to be used in the provision of CS services to UE 31.

Next, the configurations of FAP 33 and PDG 34 are described. Since the present invention mainly relates to FAP 33 and PDG 34, description regarding the configuration of other equipment is therefore omitted.

The essential configuration of FAP 33 is first described with reference to FIG. 2.

FAP 33 shown in FIG. 2 includes tunnel-establishing unit 201 and control unit 202.

Tunnel-establishing unit 201 establishes IPsec tunnels with PDG 34. IPsec tunnels that are established by tunnel-establishing unit 201 include IPsec tunnels shared by a plurality of UE 31. In the following explanation, an IPsec tunnel that is shared by a plurality of UE is referred to as a common tunnel.

Upon receiving a request from UE 31, control unit 202 transmits a message that corresponds to the request to PDG 34. When there are requests for the provision of the PS service from a plurality of UE 31, control unit 201 hereupon transmits a message that corresponds to these requests for the provision of PS service from each UE 31 to PDG 34 by way of a common tunnel.

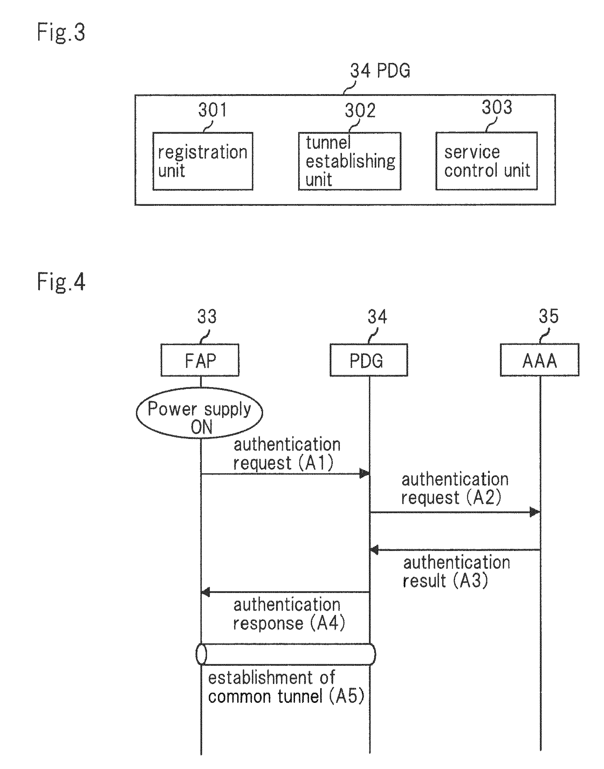

The essential configuration of PDG 34 is next described with reference to FIG. 3.

PDG 34 shown in FIG. 3 includes registration unit 301, tunnel-establishing unit 302, and service control unit 303.

Registration unit 301 acquires from HLR 12 subscriber information (hereinbelow referred to as "subscriber information (for PS)") that is used in providing the PS service to UE 31, and registers the subscriber information (for PS) in VLR 32. Registering the subscriber information (for PS) in VLR 32 enables the provision of the PS-added service even in 3G-FAP network 30. The PS-added service is, from among PS-services that are prescribed in 3GPP, a service that can be provided by referring to subscriber information (for PS) that is acquired from HLR 12. Functions that are realized by means of the PS-added service include an APN (Access Point Name)-Selection function and a QoS control function.

Tunnel-establishing unit 302 establishes IPsec tunnels with FAP 33. IPsec tunnels established by tunnel-establishing unit 302 include common tunnels that are shared by a plurality of UE 31.

When there are requests for the provision of a PS service from a plurality of UE 31, service control unit 303 provides the PS service to the plurality of UE 31 by way of a common tunnel that was established with FAP 33.

In FIG. 3, description of function blocks for relaying of messages by PDG 34 between FAP 33 and the core side has been omitted.

Next, the processing operations of the communication system of the present exemplary embodiment are described.

An operation when the power supply of FAP 33 is ON is first described with reference to FIG. 4.

When the power supply is turned ON, FAP 33 transmits an authentication request that includes information for identifying itself to PDG 34 (Step A1).

Upon receiving the authentication request from FAP 33, PDG 34 transmits to AAA 35 an authentication request that includes the information for identifying FAP 33 that is included in the received authentication request (Step A2).

Upon receiving the authentication request from PDG 34, AAA 35 uses the information for identifying FAP 33 that is included in the authentication request to carry out an authentication process and returns the authentication result to PDG 34 (Step A3). It is here assumed that the authentication is successful.

Upon receiving the authentication result that was returned from AAA 35, PDG 34 transmits an authentication response to FAP 33 (Step A4). Because the authentication result carried out by AAA 35 indicates that the authentication of FAP 33 is successful, an IPsec tunnel is established between FAP 33 and PDG 34 (Step A5). In the present exemplary embodiment, it is assumed that the IPsec tunnel established in Step A5 is used as a common tunnel. In the following explanation, it is assumed that each operation is carried out in a state in which a common tunnel has been established.

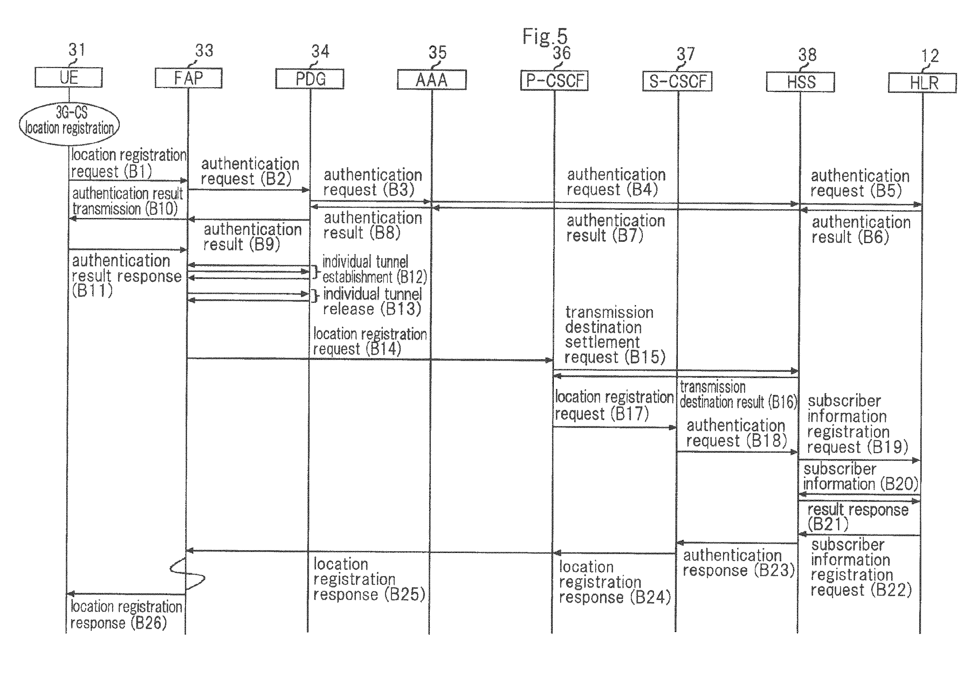

Next, an operation at the time of registering location of a CS service in 3G-Femto network 30 is described with reference to FIG. 5.

When UE 31 whose location has been registered in 3G network 10 moves into a communication area that was created by FAP 33 of 3G-Femto network 30, UE 31 starts the location registration of the CS service.

Firstly, UE 31 transmits to FAP 33 a location registration request (Location Updating Request) that includes information for identifying UE 31 (IMSI.UE: International Mobile Subscriber Identity.UE) to carry out updating (normal location updating) of the LAI (Location Area Information) (Step B1).

Upon receiving the location registration request (Location Updating Request) from UE 31, FAP 33 transmits to PDG 34 an authentication request that contains an APN (Access Point Name) and a NAI (Network Access Identifier) (Step B2). The APN is information for identifying the access point of the network. The NAI is information for identifying the access point of the network.

FAP 33, having received the Location Updating Request from UE 31, judges that the message from UE 31 is a message corresponding to a request for location registration of the CS service. FAP 33, having been requested for location registration of the CS service, includes a NAI that indicates "0CSO<UE#IMSI>/<Femto#IMSI>@realmname" in an authentication request. "0CS0" is information indicating the location registration of the CS service. "<UE#IMSI>" is information for identifying the UE, and is the IMSI.UE contained in the location registration request received in Step B1. "<Femto#IMSI>" is information for identifying the FAP.

Upon receiving the authentication request from FAP 33, PDG 34 transmits to AAA 35 an authentication request that includes the NAI that was contained in the received authentication request (Step B3).

Upon receiving the authentication request from PDG 34, AAA 35 judges the type of message that was received from PDG 34 based on the NAI that is contained in the authentication request. Because the NAI that indicates "0CS0<UE#IMSI>/<Femto#IMSI>@realmname" is contained in the authentication request that was received from PDG 34, AAA 35 judges that the message received from PDG 34 is a message corresponding to a request of location registration of the CS service. Having judged that the message is a location registration request of the CS service, AAA 35 transmits to HSS 38 an authentication request that includes IMSI.UE indicated in the NAI (Step B4).

Upon receiving the authentication request from AAA 35, HSS 38 transmits to HLR 12 an authentication request that includes the IMSI.UE contained in the received authentication request(Step B5).

Upon receiving the authentication request from HSS 38, HLR 12 acquires RAND/AUTN/CK/IK/XRES that corresponds to IMSI.UE that is contained in the authentication request and returns an authentication result that contains the RAND/AUTN/CK/XRES that was acquired to HSS 38 (Step B6).

RAND/AUTN/CK/IK/XRES is information conforming to 3GPP. RAND denotes "Random Challenge." AUTH denotes "Authentication Token." CK denotes "Cipher Key." IK denotes "Integrity Key." XRES denotes "Expected REsponse."

In this processing operation, HLR 12 transmits an authentication result that contains RAND/AUTN/CK/IK/XRES (EAP-AKA authentication). However, HLR 12 may transmit an authentication result that contains RAND/AUTH/KC/RES (EAP-SIM authentication). HLR 12 selects either EAP-AKA authentication (UMTS authentication) or EAP-SIM authentication (GSM authentication) in accordance with the capability of the network with which the UE indicated by IMSI.UE is contracted.

Upon receiving the authentication result from HLR 12, HSS 38 returns to AAA 35 an authentication result that contains RAND/AUTN/CK/IK/XRES that was contained in the received authentication result (Step B7).

Upon receiving the authentication result from HSS 38, AAA 35 returns to PDG 34 an authentication result that contains RAND/AUTN/CK/IK that was contained in the received authentication result (Step B8).

Upon receiving the authentication result from AAA 35, PDG 34 returns to FAP 33 an authentication result that contains RAND/AUTN/CK/IK that was contained in the received authentication result (Step B9).

Upon receiving the authentication result from PDG 34, FAP 33 transmits to UE 31 an authentication result that contains RAND/AUTN that was contained in the received authentication result (Step B10).

Upon receiving the authentication result from FAP 33, UE 31 carries out an authentication operation based on RAND/AUTN that was contained in the authentication result, and transmits to FAP 33 an authentication result response that contains the operation result (Step B11). The authentication operation by UE 31 is performed using a method that complies with 3GPP.

The result of the authentication operation performed by UE 31 is transmitted to AAA 35 by way of FAP 33 and PDG 34. AAA 35 carries out authentication of UE 31 based on the result of the authentication operation performed by UE 31. The authentication of UE 31 performed by AAA 35 is performed using a method that complies with 3GPP. If authentication of UE 31 is successful, AAA 35 transmits notification of this success to PDG 34.

Upon receiving notification of the success of the authentication of UE 31 from AAA 35, PDG 34 carries out transmission and reception of messages with FAP 33. By means of the transmission and reception of messages between PDG 34 and FAP 33, IPsec tunnels are established (Step B12). These IPsec tunnels are established in UE units. In the following explanation, the IPsec tunnels that are established in UE units are referred to as individual tunnels.

After establishment of an individual tunnel, FAP 33 transmits to PDG 34 an INFORMATIONAL Request by way of the individual tunnel. Upon receiving the INFORMATIONAL Request from FAP 33, PDG 34 transmits to FAP 33 an INFORMATIONAL Response. Transmission and reception of messages is then carried out between PDG 34 and FAP 33, and the individual tunnel that was established in Step B12 is released (Step B13).

As described above, the authentication process of UE is carried out in a state in which a common tunnel has been established between FAP 33 and PDG 34 in the present exemplary embodiment. After the authentication process of UE has been completed, there is no need to establish an individual tunnel between FAP 33 and PDG 34. Therefore, the individual tunnel that was established in Step B12 is released in Step B13, whereby the unnecessary IPsec tunnel is released to enable effective utilization of resources.

Next, FAP 33 transmits to P-CSCF 36 a location registration request that contains the IMSI.UE of UE 31 (Step B14).

Upon receiving the location registration request from FAP 33, P-CSCF 36 transmits to HSS 38 a transmission destination settlement request (Step B15).

Upon receiving the transmission destination settlement request from P-CSCF 36, HSS 38 returns to P-CSCF 36 a transmission destination result (Step B16).

Upon receiving the transmission destination result from HSS 38, P-CSCF 36 transmits to S-CSCF 37 a location registration request that contains the IMSI.UE of UE 31 (Step B17).

Upon receiving the location registration request from P-CSCF 36, S-CSCF 37 transmits to HSS 38 an authentication request that contains the IMSI.UE that was contained in the location registration request (Step B18).

Upon receiving the authentication request from S-CSCF 37, HSS 38 transmits to HLR 12 a subscriber information registration request that contains the IMSI.UE that was contained in the authentication request (Step B 19).

Upon receiving the subscriber information registration request from HSS 38, HLR 12 transmits to HSS 38 a subscriber information (for CS) of the UE that was indicated by the IMSI.UE that was contained in the subscriber information registration request (Step B20).

Upon receiving the subscriber information (for CS) from HLR 12, HSS 38 registers the subscriber information in VLR 32. Thus, by registering the subscriber information (for CS) of UE 31 in VLR 32, CS service can also be provided in 3G-Femto network 30. After registering the subscriber information (for CS), HSS 38 transmits to HLR 12 a result response (Step B21).

Upon receiving the result response from HSS 38, HLR 12 transmits to HSS 38 a subscriber information registration request that contains the MSISDN (Mobile Subscriber ISDN Number) of UE 31 (Step B22).

Upon receiving the subscriber information registration request from HLR 12, HSS 38 transmits to S-CSCF 37 an authentication response that contains the MSISDN that was contained in the subscriber information registration request (Step B23).

Upon receiving the authentication response from HSS 38, S-CSCF 37 transmits to P-CSCF 36 a location registration response that contains the MSISDN that was contained in the authentication response (Step B24).

Upon receiving the location registration response from S-CSCF 37, P-CSCF 36 transmits to FAP 33 a location registration response that includes MSISDN that was contained in the received location registration response (Step B25).

Upon receiving the location registration response from P-CSCF 36, FAP 33 transmits a location registration response to UE 31 that is indicated by the MSISDN that was contained in the received location registration response (Step B26).

Through the above-described processes, the subscriber information (for CS) of UE 31 is registered in VRL 32, and the location registration of UE 31 is completed.

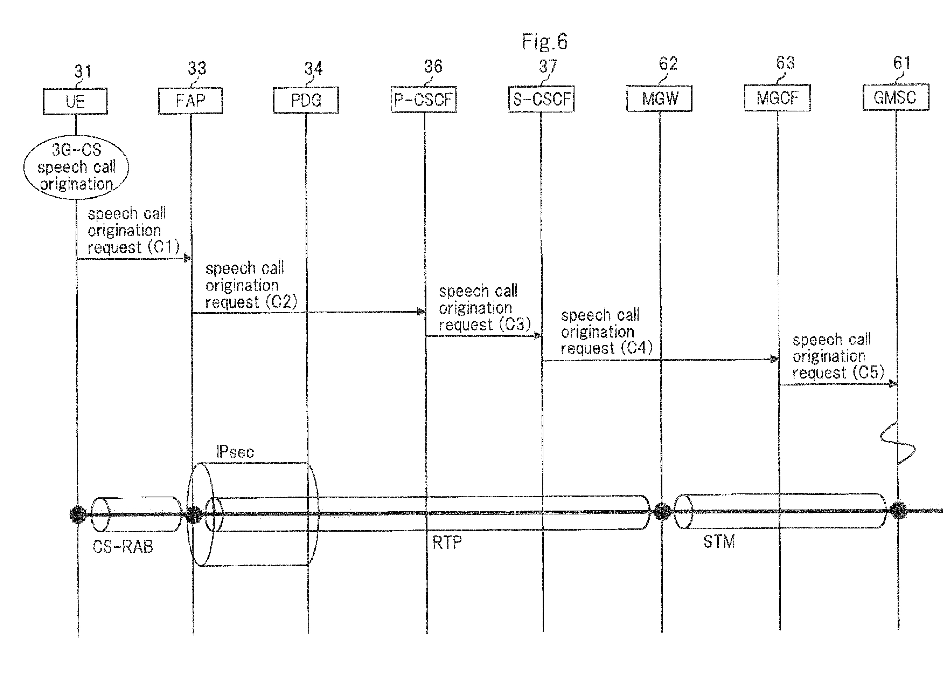

Next, the operation at the time of CS speech call origination in 3G-Femto network 30 is described with reference to FIG. 6. Although description was omitted in FIG. 1, transmission system 1 of the present exemplary embodiment further includes GMSC (Gateway Mobile Switching Center) 61 that performs routing of call connections to UE, MGW (Media Gateway) 62 that converts messages received from GMSC 61 to messages of a prescribed protocol in 3G-Femto network 30 and transmits them to FPA 33, and MGCF (Media Gateway Control Function 63) that controls MGW 62. Because GMSC 61, MGW 62, and MGCF 63 are also related to the process at the time of CS speech call origination, description of these components is therefore shown in FIG. 6.

When a request for CS speech call origination is input to UE31, UE 31 transmits the speech call origination request to FAP 33 (Step C1).

Upon receiving the speech call origination request from UE 31, FAP 33 transmits a speech call origination request to P-CSCF 36 (Step C2).

Upon receiving the speech call origination request from FAP 33, P-CSCF 36 transmits a speech call origination request to S-CSCF 37 (Step C3).

Upon receiving the speech call origination request from P-CSCF 36, S-CSCF 37 transmits a speech call origination request to MGCF 63 (Step C4).

Upon receiving the speech call origination request from S-CSCF 37, MGCF 63 transmits a speech call origination request to GMSC 61 (Step C5).

The above-described processing steps from Step C1 to Step C5 enables the transmission and reception of signals by means of STM (Synchronous Transfer Mode) between GMSC 61 and MGW 62. In addition, the transmission and reception of signals by means of RTP (Real-time Transfer Protocol) becomes possible between MGW 62 and FAP 33. MGW 62 converts messages between STM and RTP. Here, MGW 62 transmits signals to FPA 33 by way of a common tunnel that was established in Step A5 of FIG. 4.

FAP 33 establishes a radio bearer (CS-RAB) with UE 31 that transmitted the speech call origination request, and performs transmission of signals to and reception of signals from UE 31 by way of the radio bearer.

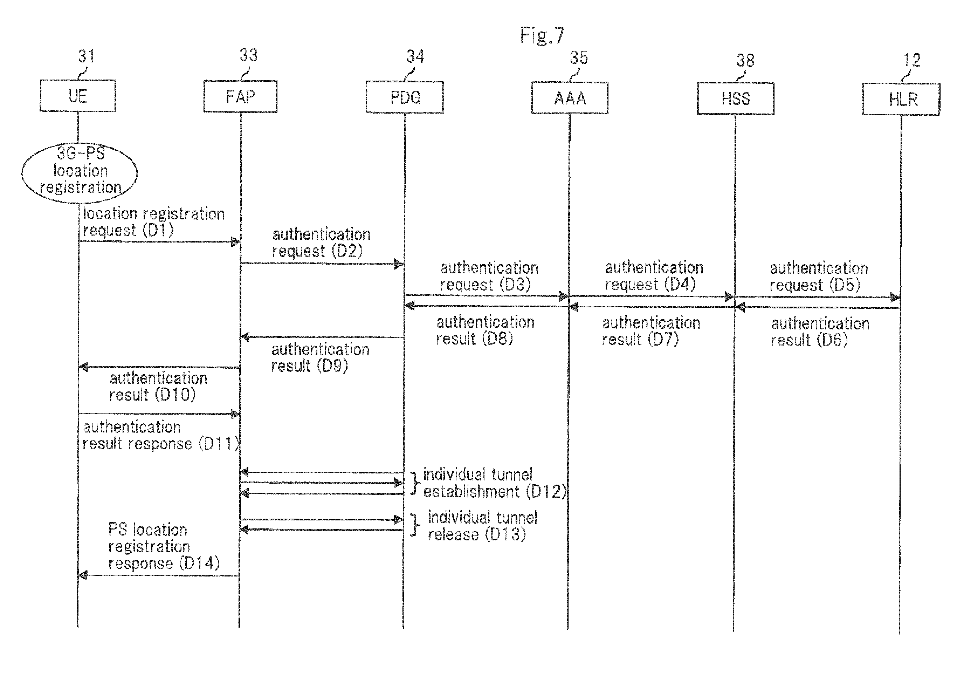

Next, the operation at the time of location registration of a PS service in 3G-Femto network 30 is are described with reference to FIG. 7.

When UE 31 whose location is registered in 3G network 10 moves into the communication area created by FAP 33, UE 31 starts location registration of the PS service.

Firstly, UE 31 transmits to FAP 33 a location registration request (Routing Area Updating Request) that contains the IMSI.UE to carry out updating (normal routing updating) of the RAI (Routing Area Information) (Step D1).

Upon receiving the location registration request (Routing Area Updating Request) from UE 31, FAP 33 transmits an authentication request that includes the APN and NAI to PDG 34 (Step D2).

Upon receiving the Routing Area Updating Request from UE 31, FAP 33 judges that the message received from UE 31 is a message corresponding to a PS service location registration request. When the location registration of the PS service is requested, FAP 33 includes a NAI that indicates "0PS0<UE#IMSI>/<Femto#IMSI>@realmname" in the authentication request. "0PS0" is information indicating the location registration of the PS service. "<UE#IMSI>" is information for identifying the UE and is the IMSI.UE contained in the location registration request received in Step D1. "<Femto#IMSI>" is information for identifying the FAP.

Upon receiving the authentication request from FAP 33, PDG 34 transmits to AAA 35 an authentication request that contains the NAI that was contained in the received authentication request (Step D3).

Upon receiving the authentication request from PDG 34, AAA 35 judges the type of message that was received from PDG 34 based on the NAI that was contained in the authentication request. Because NAI indicating "0PSO<UE#IMSI>/<Femto#IMSI>@realmname" was contained in the authentication request received from PDG 34, AAA 35 judges that the message received from PDG 34 is a message corresponding to a PS service location registration request. Upon judging that the message is a PS service location registration request, AAA 35 transmits to HSS 38 an authentication request that contains IMSI.UE that was indicated in the NAI (Step D4).

Upon receiving the authentication request from AAA 35, HSS 38 transmits to HLR 12 an authentication request that contains IMSI.UE that was contained in the received authentication request (Step D5).

Upon receiving the authentication request from HSS 38, HLR 12 acquires RAND/AUTN/CK/IK/XRES that corresponds to the IMSI.UE that was contained in the authentication request, and returns to HSS 38 an authentication result that contains RAND/AUTN/CK/XRES that was acquired (Step D6).

Upon receiving the authentication result from HLR 12, HSS 38 returns to AAA 35 an authentication result that contains the RAND/AUTN/CK/IK/XRES that was contained in the received authentication result (Step D7).

Upon receiving the authentication result from HSS 38, AAA 35 returns to PDG 34 an authentication result that contains the RAND/AUTN/CK/IK that was contained in the received authentication result (Step D8).

Upon receiving the authentication result from AAA 35, PDG 34 returns to FAP 33 an authentication result that contains the RAND/AUTN/CK/IK that was contained in the received authentication result (Step D9).

Upon receiving the authentication result from PDG 34, FAP 33 transmits to UE 31 an authentication result that contains the RAND/AUTN that was contained in the received authentication result (Step D10).

Upon receiving the authentication result from FAP 33, UE 31 carries out an authentication operation based on the RAND/AUTN that was contained in the authentication result and transmits to FAP 33 the authentication result response that contains the operation result (Step D11). The authentication operation by UE 31 is performed using a method that complies with 3GPP.

The result of the authentication operation performed by UE 31 is transmitted to AAA 35 by way of FAP 33 and PDG 34. AAA 35 carries out authentication of UE 31 based on the result of the authentication operation performed by UE 31. The authentication of UE 31 performed by AAA 35 is performed using a method that complies with 3GPP. If authentication of UE 31 is successful, AAA 35 transmits notification of this success to PDG 34.

Upon receiving notification of the success of the authentication of UE 31 from AAA 35, PDG 34 carries out transmission and reception of messages with FAP 33. By means of the transmission and reception of messages between PDG 34 and FAP 33, an individual tunnel is established (Step D12).

After the establishment of an individual tunnel, FAP 33 transmits to PDG 34 an INFORMATIONAL Request by way of the individual tunnel. Upon receiving the INFORMATIONAL Request from FAP 33, PDG 34 transmits to FAP 33 an INFORMATIONAL response. The transmission and reception of messages between PDG 34 and FAP 33 is then carried out, and the individual tunnel established in Step D12 is released (Step D13). Then, FAP 33 transmits to UE 31 a PS location registration response message (Step D14).

As described above, in the present exemplary, the authentication process of UE 31 is carried out in a state in which a common tunnel is established between FAP 33 and PDG 34. Upon success of the authentication process of UE 31, an individual tunnel is established between FAP 33 and PDG 34, and after carrying out transmission and reception of prescribed messages between FAP 33 and PDG 34, the individual tunnel is released. In this way, the authentication process of UE 31 can be carried out during location registration of the PS service.

Next, the operation at the time of PS call origination in 3G-Femto network 30 is described.

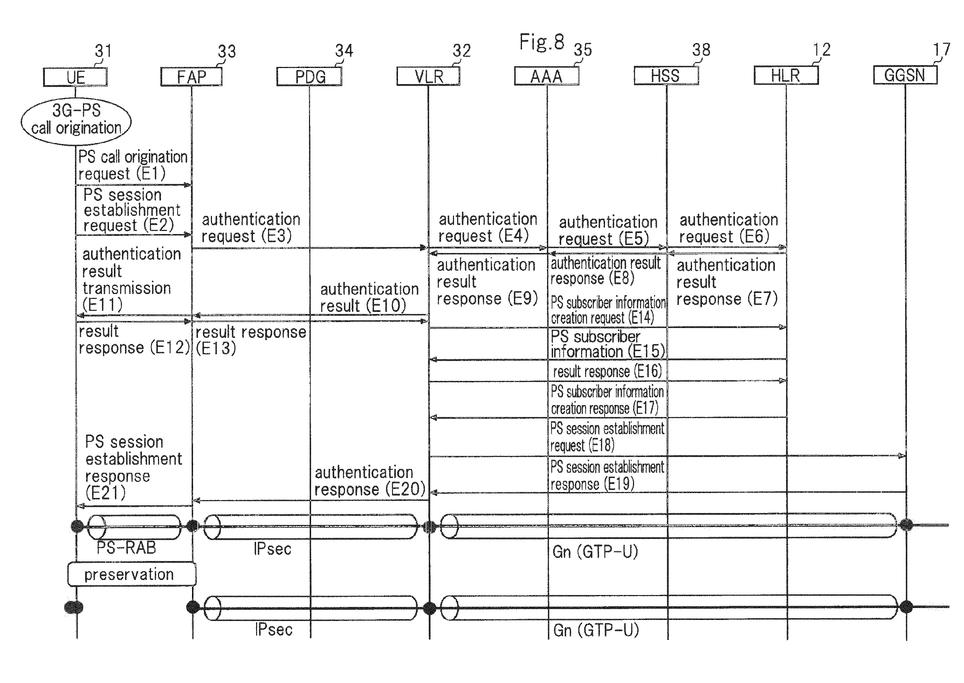

First, for the purpose of comparison, an example of the operation when applying the method of establishing IPsec tunnels in UE units prescribed in 3GPP TS 24.327 will be described with reference to FIG. 8. In this example of operations, VLR 32 is assumed to operate as a SGSN that controls providing the PS service to UE 31.

When a request for PS call origination is input to UE 31, UE 31 transmits to FAP 33 a PS call origination request (Step E1). Next, UE 31 transmits to FAP 33 a PS session establishment request (Active PDP (Packet Data Protocol) Context Request) that contains the IMSI.UE (Step E2).

Upon receiving the PS session establishment request (Active PDP Context Request) from UE 31, FAP 33 transmits to VLR 32 an authentication request that contains the APN and NAI (Step E3).

Upon receiving the Active PDP Context Request from UE 31, FAP 33 judges that the message received from UE 31 is a message corresponding to a PS call origination request. When PS call origination is requested, FAP 33 includes a NAI that indicates "0PDP0<UE#IMSI>/<Femto#IMSI>@realmname" in an authentication request and transmits the authentication request to VLR 32. "0PDP0" is information indicating PS call origination. "<UE#IMSI>" is information for identifying the UE and is the IMSI.UE that was contained in the PS session establishment request that was received in Step E2. "<Femto#IMSI>" is information for identifying the FAP.

Upon receiving the authentication request from FAP 33, VLR 32 transmits to AAA 35 an authentication request that contains the NAI that was included in the received authentication request (Step E4).

Upon receiving the authentication request from VRL 32, AAA 35 judges the type of message that was received from VLR 32 based on the NAI that was contained in the authentication request. Because NAI that indicates "0PDP0<UE#IMSI>/<Femto#IMSI>@realmname" was included in the authentication request that was received from VLR 32, AAA 35 judges that the message received from VLR 32 is a message corresponding to a request of PS call origination. Upon judging that the message is a PS call origination request, AAA 35 transmits to HSS 38 an authentication request that includes the IMSI.UE that was indicated in the NAI (Step E5).

Upon receiving the authentication request from AAA 35, HSS 38 transmits to HLR 12 an authentication request that includes the IMSI.UE that was contained in the received authentication request (Step E6).

Upon receiving the authentication request from HSS 38, HLR 12 acquires the RAND/AUTN/CK/IK/XRES that corresponds to the IMSI.UE that was contained in the authentication request and transmits to HSS 38 an authentication result response that contains RAND/AUTN/CK/XRES that was acquired (Step E7).

Upon receiving the authentication result response from HLR 12, HSS 38 transmits to AAA 35 an authentication result response that contains the RAND/AUTN/CK/IK/XRES that was contained in the received authentication result response (Step E8).

Upon receiving the authentication result response from HSS 38, AAA 35 transmits to VLR 32 an authentication result response that contains the RAND/AUTN/CK/IK that was contained in the received authentication result response (Step E9).

Upon receiving the authentication result response from AAA 35, VLR 32 returns to FAP 33 an authentication result response that includes the RAND/AUTN/CK/IK that was contained in the received authentication result response (Step E10).

Upon receiving the authentication result response from PDG 34, FAP 33 transmits to UE 31 an authentication result that contains the RAND/AUTN that was contained in the received authentication result response (Step E11).

Upon receiving the authentication result from FAP 33, UE 31 carries out an authentication operation based on the RAND/AUTN that was contained in the authentication result, and transmits a result response that contains the operation result to FAP 33 (Step E12). The authentication operation by UE 31 is performed using a method that complies with 3GPP.

Upon receiving the result response from UE 31, FAP 33 transmits to VLR 32 a result response that contains the result of the authentication operation that was contained in the received result response (Step E13). VLR 32 transmits to AAA 35 the result of the authentication operation that was contained in the result response that was received from FAP 31. AAA 35 carries out authentication of UE 31 based on the result of the authentication operation. The authentication of UE 31 performed by AAA 35 is performed using a method that complies with 3GPP. Upon the success of the authentication of UE 31, AAA 35 transmits notification of this success to VLR 32.

Upon receiving the notification of the success of the authentication of UE 31 from AAA 35, VLR 32 transmits to HLR 12 a PS subscriber information creation request that requests the creation of subscriber information (for PS) of the UE 31 (Step E14).

Upon receiving the request to create subscriber information (for PS) of UE 31 from VLR 32, HLR 12 creates subscriber information (for PS) of the UE 31 from the subscriber information that is being managed and transmits 32 the subscriber information (for PS) that was created to VLR (Step E15).

VLR 32 stores the subscriber information (for PS) of UE 32 that was transmitted in from HLR 12. By registering the subscriber information of UE 31 in VLR 32 in this way, the PS-added service can be offered to UE 31. Upon storing the subscriber information (for PS) of UE 31, VLR 32 transmits a result response to HLR 12 (Step E16).

Upon receiving the result response from VLR 32, HLR 12 transmits to VRL 32 a PS subscriber information creation response to VRL 32 (Step E17).

Upon receiving the PS subscriber information creation response from HLR 12, VLR 32 transmits a PS session establishment request to GGSN 17 (Step E18).

Upon receiving the PS session establishment request from VLR 32, GGSN 17 transmits a PS session establishment response to VLR 32 (Step E19).

Upon receiving the PS session establishment response from GGSN 17, VLR 32 transmits an authentication response to FAP 33 (Step E20).

Upon receiving the authentication response from VLR 32, FAP 33 transmits a PS session establishment response to UE 31 (Step E21).

By means of the above-described processes from Step E1 to Step E21, tunnel Gn according to GTP-U protocol is established between GGSN 17 and VLR 32. In addition, an IPsec tunnel is established between VLR 32 and FAP 33. In this example of an operation, an IPsec tunnel (individual tunnel) is hereupon established for each UE that has requested PS call origination. Therefore, the problem arises in which the number of IPsec tunnels established by FAP 33 increases with the result that the maximum number of IPsec tunnels that FAP 33 can establish is reached and the number of UE that cannot connect with FAP 33 increases.

A radio bearer (PS-RAB) is established between FAP 33 and UE 31. If, for example, there is no transmission or reception of signals for at least a predetermined time interval, a process referred to as preservation is carried out in which the radio bearer between FAP 33 and UE 31 is released.

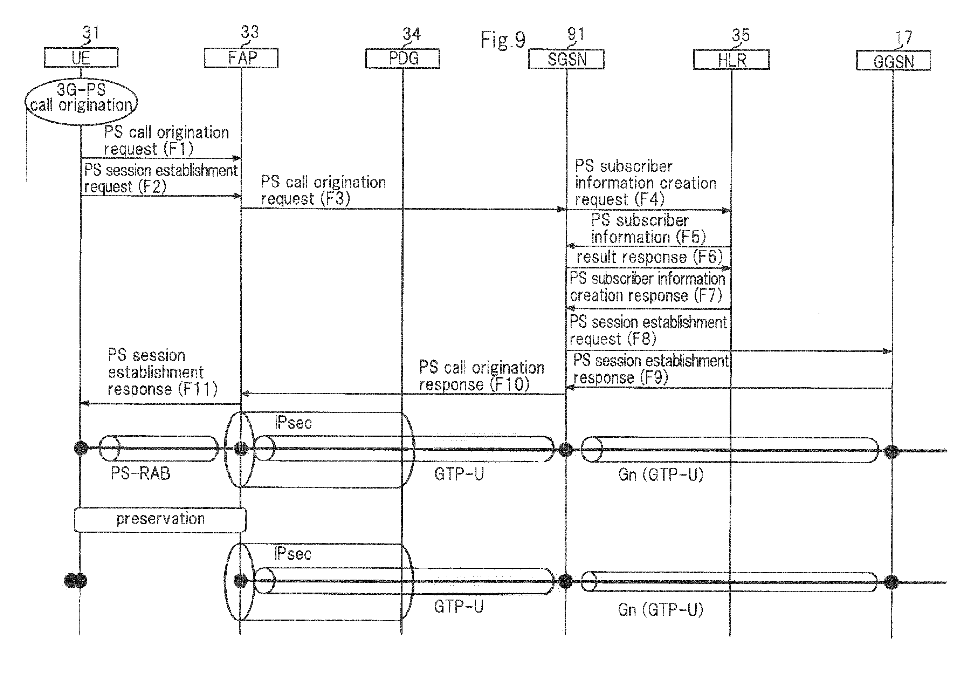

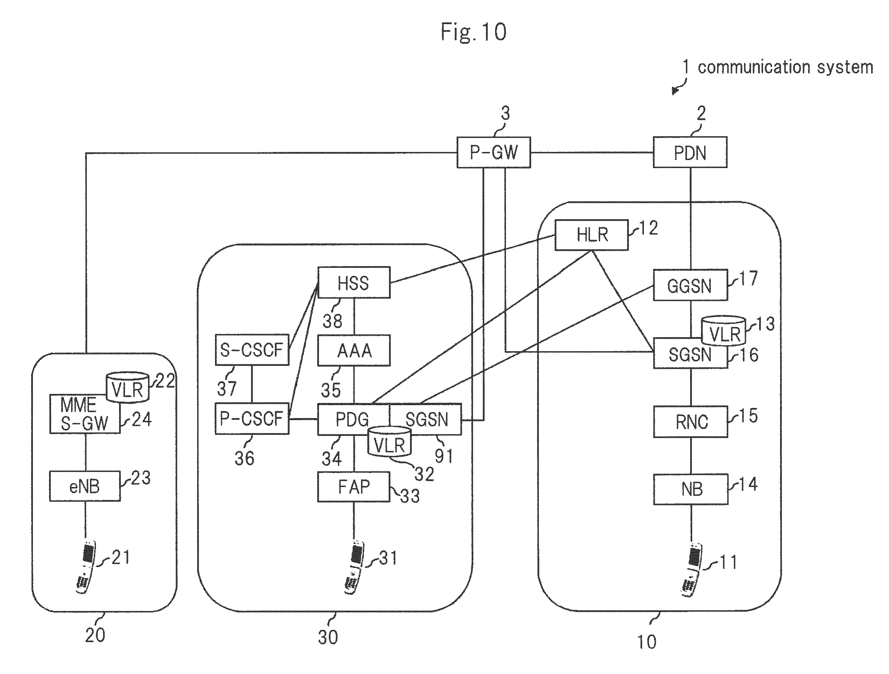

Next, the operation at the time of PS call origination in 3G-Femto network 30 of the present exemplary embodiment is described with reference to FIG. 9. Although the explanation has used an example in which PDG 34 virtually functions as SGSN in the present exemplary embodiment, for the purpose of comparison, explanation in FIG. 9 next regards a case in which SGSN 91 is provided separate from PDG 34. FIG. 10 shows an example of the network configuration when SGSN 91 is provided. In FIG. 10, the same reference numbers are given to constructions that are the same as in FIG. 1, and redundant explanation is omitted.

Referring to FIG. 9, when a request for PS call origination is input to UE 31, UE 31 transmits to FAP 33 a PS call origination request (Step F1). Next, UE 31 transmits to FAP 33 a PS session establishment request (Active PDP Context Request) that includes the IMSI.UE (Step F2).

Upon receiving the PS session establishment request (Active PDP Context Request) from UE 31, FAP 33 transmits to SGSN 91 an authentication request that includes the APN and NAI by way of a common tunnel that has been established between FAP 33 and PDG 34 (Step F3).

Upon receiving the Active PDP Context Request from UE 31, FAP 33 judges that the message received from UE 31 is a message that corresponds to the PS call origination request. When PS call origination is requested, FAP 33 includes the NAI that indicates "0PDP0<UE#IMSI>/<Femto#IMSI>@realmname" in an authentication request. "0PDP0" is information that indicates PS call origination. "<UE#IMSI>" is information for identifying the UE and is the IMSI.UE that was included in the PS session establishment request that was received in Step F2. "<Femto#IMSI>" is information for identifying the FAP.

Upon receiving the PS session establishment request from FAP 33, SGSN 91 transmits to HLR 12 a subscriber information creation request (MAP Update GPRS Location) that requests the creation of the subscriber information (for PS) of UE 31 that was indicated by the IMSI.UE that was contained in the PS session establishment request (Step F4).

Upon receiving the request to create the subscriber information (for PS) of UE 31 from SGSN 91, HLR 12 creates the subscriber information (for PS) of UE 31 from the subscriber information that is being managed and transmits the subscriber information (for PS) (MAP-Insert Subscriber Data) that was created to SGSN 91 (Step F5).

SGSN 91 registers the subscriber information (for PS) of UE 31 that was transmitted from HLR 12 in VLR 32. Thus, by registering the subscriber information of UE 31 in VLR 32, a PS-added service can be offered to UE 31. Upon registering the subscriber information (for PS) of UE 31 in VLR 32, SGSN 91 transmits a result response (MAP-Insert Subscriber Data Ack) to HLR 12 (Step F6).

Upon receiving the result response from SGSN 91, HLR 12 transmits a PS subscriber information creation response (MAP-Update GPRS Location Ack) 91 to SGSN 91 (Step F7).

Upon receiving the PS subscriber information creation response from HLR 12, SGSN 91 transmits a PS session establishment request to GGSN 17 (Step F8).

Upon receiving the PS session establishment request from SGSN 91, GGSN 17 transmits a PS session establishment response to SGSN 91 (Step F9).

Upon receiving the PS session establishment response from GGSN 17, SGSN 91 transmits to FAP 33 a PS call origination response by way of a common tunnel that was established between PDG 34 and FAP 33 (Step F10).

Upon receiving the authentication response from SGSN 91, FAP 33 transmits a PS session establishment response to UE 31 (Step F11).

By means of the above-described processes from Step F1 to Step F11, tunnel Gn according to GTP-U protocol is established between GGSN 17 and SGSN 91. In addition, tunnel Gn according to GTP-U protocol is established between SGSN 91 and FAP 33.

In the present exemplary embodiment, the transmission of the PS call origination request from FAP 33 to SGSN 91 in Step F3 and the transmission of the PS call origination response from SGSN 91 to FAP 33 in Step F10 are carried out by way of a common tunnel. As a result, when there are PS call origination requests from a plurality of UE, the need to establish an IPsec tunnel for each UE is eliminated and the processing load of FAP 33 can be reduced.

In addition, FAP 33 and SGSN 91, via the transmission and reception of a PS call origination request and a PS call origination response, exchange each other's tunnel IDs to establish a tunnel according to GTP-U protocol rather than an IPsec tunnel. As a result, tunnel Gn is established between SGSN 91 and FAP 33 in the common tunnel that was established between FAP 33 and PDG 34. When there have been requests for providing a PS service from a plurality of UE, SGSN 91 provides the PS service to the plurality of UE by way of a common IPsec tunnel (common tunnel). Therefore, the need to establish IPsec tunnels for each UE is eliminated even when the PS service is being provided to a plurality of UE, and the processing load of FAP 33 can be reduced.

Thus, according to the present exemplary embodiment, an IPsec tunnel (common tunnel) shared by a plurality of UE is established between FAP 33 and SGSN and PS service is provided to the plurality of UE via the shared IPsec tunnel (common tunnel).

Therefore, the need for establishing an IPsec tunnel for each UE is eliminated, and the processing load of FAP 33 can be reduced.

Here the above exemplary embodiment is a preferred exemplary embodiment of the present invention, and the scope of the present invention should not be limited to the above exemplary embodiment alone, but various changes can be made without deviating from the gist of the present invention.

For example, although examples in which PDG 34 functioned as SGSN were chiefly used for description in the above-described exemplary embodiment, SGSN may also be provided apart from PDG 34 as shown in FIG. 10. Therefore, the communication system of the present exemplary embodiment can be constructed by means of various system configurations as long as an IPsec tunnel can be established between FAP 33 and PDG 34 and the PS service can be offered to a plurality of UE via a common IPsec tunnel when there have been requests for the provision of the PS service from this plurality of UE.

The communication system in the present exemplary embodiment can carry out processing regardless of the 3GPP version.

In addition, the control operation in each apparatus that makes up the communication system in the above-described exemplary embodiment can be also executed by hardware, software or by complex combination of hardware and software.

When the processing is executed using software, it is possible to install the program recorded with processing sequences in the memory of a computer built in dedicated hardware and make the computer execute the program. Alternatively, the program may be installed into a general-purpose computer that can execute each of the processes.

For example, the program may be recorded in advance in a hard disk or ROM (Read Only Memory) as a recording medium. Alternatively, the program may be stored (recorded) temporarily or permanently in a removable recording medium. Such a removable recording medium can be provided as so-called package software. Examples of the removable recording media include floppy (registered trademark) disks, CD-ROM (Compact Disc Read Only Memory), MO (magneto optical) disks, DVDs (Digital Versatile Disc), magnetic disks, semiconductor memories and the like.

Here, the program may be installed in the computer from a removable recording medium described above. Also, the program may be wirelessly transferred to the computer from a download site. Alternatively, the program may be transferred by wire to the computer via a network.

The communication system in the present exemplary embodiment is not only configured to time-sequentially execute the progressing operations described in the above exemplary embodiments but can be also configured to execute the processing operations in parallel or individually, depending on the processing capacity of the apparatus to execute the process, or as needed.

Further, the communication system in the present exemplary embodiment may be configured of a logical set of multiple apparatuses, or may be configured of individual apparatuses residing in a single housing.

Although the invention of the present application has been described with reference to an exemplary embodiment, the present invention is not limited to the above-described exemplary embodiment. The configuration and details of the invention of the present application are open to various modifications within the scope of the invention of the present application that will be clear to one of ordinary skill in the art.

The present application claims priority based on Japanese Patent Application JP 2012-118700 filed on May 24, 2012, the entire content of which is incorporated herein by reference in its entirety.

The whole or part of the above-described exemplary embodiments disclosed above can be described as, but limited to, the following supplementary notes.

### (Supplementary note 1)

A service control apparatus that provides a PS (Packet Switching) service to UE (User Equipment) that are present in a communication area that is created by a femtocell base station in an IMS (IP Multimedia subsystem) network, comprising:
tunnel-establishing means that establishes IPsec (Security Architecture for Internet Protocol) tunnels with the femtocell base station; and
service control means that, when there are requests for provision of the PS service from a plurality of the UE, provides the PS service to the plurality of UE by way of a common IPsec tunnel that was established by the tunnel-establishing means.

### (Supplementary note 2)

The service control apparatus according to Supplementary note 1 further comprising:
registration means that acquires subscriber information of the UE from an HLR (Home Location Register) that manages subscriber information for providing the PS service and registers the subscriber information in a VLR (Visitor Location Register) that is present in the IMS network;
wherein the service control means uses the subscriber information that is registered in the VLR to provide the PS service.

### (Supplementary note 3)

A relay apparatus that relays messages between a femtocell base station that creates a communication area in an IMS (IP Multimedia subsystem) network and a core side, comprising:
tunnel-establishing means that establishes IPsec (Security Architecture for Internet Protocol) tunnels with the femtocell base station; and
service control means that, when there are requests for the provision of a PS (Packet Switching) service from a plurality of UE (User Equipment) that is present within the communication area, provides the PS service to the plurality of UE by way of a common IPsec tunnel that was established with the femtocell base station by means of the tunnel-establishing means.

### (Supplementary note 4)

The relay apparatus according to Supplementary note 3, further comprising:
registration means that acquires subscriber information of the UE from an HLR (Home Location Register) that manages subscriber information for providing the PS service and registers the subscriber information in a VLR (Visitor Location Register) that is present in the IMS network;
wherein the service control means uses the subscriber information that was registered in the VLR to provide the PS service.

### (Supplementary note 5)

A femtocell base station creates a communication area in an IMS (IP Multimedia subsystem) network, comprising:
tunnel-establishing means that establishes IPsec tunnels with a service control apparatus that provides a PS (Packet Switching) service to UE (User Equipment) that are present within the communication area; and
control means that, when there are requests for provision of the PS service from a plurality of the UE, transmits and receives messages that correspond to the provision of the PS service to the plurality of UE to and from the service control apparatus by way of a common IPsec tunnel that was established by the tunnel-establishing means.

### (Supplementary note 6)

The femtocell base station according to Supplementary note 5, further comprising:
registration means that acquires subscriber information of the UE from an HLR (Home Location Register) that manages subscriber information for providing the PS service and registers the subscriber information in a VLR (Visitor Location Register) that is present in the IMS network.

### (Supplementary note 7)

A communication system that makes up an IMS (IP Multimedia subsystem) network and that is equipped with a femtocell base station that creates a communication area and a service control apparatus that provides a PS (Packet Switching) service to UE (User Equipment) that are present within the communication area, wherein:
the femtocell base station establishes IPsec tunnels between the femtocell base station and the service control apparatus; and
the service control apparatus, when there are requests for provision of the PS service from a plurality of the UE, provides the PS service to the plurality of UE by way of a common IPsec tunnel.

### (Supplementary note 8)

The communication system according to Supplementary note 7, wherein:
the service control apparatus acquires subscriber information of the UE from an HLR (Home Location Register) that manages subscriber information for providing the PS service and registers the subscriber information in a VLR (Visitor Location Register) that is present in the IMS network.

### (Supplementary note 9)

The communication system according to Supplementary note 7 or 8, wherein:
the service control apparatus is a relay apparatus that relays messages between the femtocell base station and the core side.

### (Supplementary note 10)

A control method of a service control apparatus that provides a PS (Packet Switching) service to UE (User Equipment) that are present within a communication area created by a femtocell base station in an IMS (IP Multimedia subsystem) network, comprising:
establishing IPsec (Security Architecture for Internet Protocol) tunnels with the femtocell base station; and
when there are requests for provision of the PS service from a plurality of the UE, providing the PS service to the plurality of UE by way of a common IPsec tunnel.

### (Supplementary note 11)

A control method of a femtocell base station that creates a communication area in an IMS (IP Multimedia subsystem) network, comprising:
establishing IPsec tunnels with a service control apparatus that provides a PS (Packet Switching) service to UE (User Equipment) that are present within the communication area; and
when there are requests for provision of the PS service from a plurality of the UE, transmitting and receiving messages that are corresponding to the provision of the PS service to the plurality of UE to and from the service control apparatus by way of a common IPsec tunnel.

### (Supplementary note 12)

A program that causes a computer to execute:
a process of establishing IPsec tunnels between a femtocell base station that creates a communication area in an IMS (IP Multimedia subsystem) network and a service control apparatus that provides a PS service to UE that are present within the communication area; and
a process of, when there are requests for provision of the PS service from a plurality of the UE, providing the PS service to the plurality of UE by way of a common IPsec tunnel.

## Claims

1. A service control apparatus that provides a PS (Packet Switching) service to UE (User Equipment) that are present in a communication area that is created by a femtocell base station in an IMS (IP Multimedia subsystem) network, comprising:
tunnel-establishing means that establishes IPsec (Security Architecture for Internet Protocol) tunnels with said femtocell base station; and
service control means that, when there are requests for provision of said PS service from a plurality of said UE, provides said PS service to said plurality of UE by way of a common IPsec tunnel that was established by said tunnel-establishing means.

2. The service control apparatus according to claim 1, further comprising:
registration means that acquires subscriber information of said UE from an HLR (Home Location Register) that manages subscriber information for providing said PS service and registers said subscriber information in a VLR (Visitor Location Register) that is present in said IMS network;
wherein said service control means uses said subscriber information that is registered in said VLR to provide said PS service.

3. A relay apparatus that relays messages between a femtocell base station that creates a communication area in an IMS (IP Multimedia subsystem) network and a core side, comprising:
tunnel-establishing means that establishes IPsec (Security Architecture for Internet Protocol) tunnels with said femtocell base station; and
service control means that, when there are requests for provision of a PS (Packet Switching) service from a plurality of UE (User Equipment) that is present within said communication area, provides said PS service to said plurality of UE by way of a common IPsec tunnel that was established with said femtocell base station by means of said tunnel-establishing means.

4. The relay apparatus according to claim 3, further comprising:
registration means that acquires subscriber information of said UE from an HLR (Home Location Register) that manages subscriber information for providing said PS service and registers said subscriber information in a VLR (Visitor Location Register) that is present in said IMS network;
wherein said service control means uses said subscriber information that was registered in said VLR to provide said PS service.

5. A femtocell base station that creates a communication area in an IMS (IP Multimedia subsystem) network, comprising:
tunnel-establishing means that establishes IPsec tunnels with a service control apparatus that provides a PS (Packet Switching) service to UE (User Equipment) that are present within said communication area; and
control means that, when there are requests for provision of said PS service from a plurality of said UE, transmits and receives messages that correspond to the provision of said PS service to said plurality of UE to and from said service control apparatus by way of a common IPsec tunnel that was established by said tunnel-establishing means.

6. The femtocell base station according to claim 5, further comprising:
registration means that acquires subscriber information of said UE from an HLR (Home Location Register) that manages subscriber information for providing said PS service and registers said subscriber information in a VLR (Visitor Location Register) that is present in said IMS network.

7. A communication system that makes up an IMS (IP Multimedia subsystem) network and that is equipped with a femtocell base station that creates a communication area and a service control apparatus that provides a PS (Packet Switching) service to UE (User Equipment) that are present within said communication area, wherein:
said femtocell base station establishes IPsec tunnels between said femtocell base station and said service control apparatus; and
said service control apparatus, when there are requests for provision of said PS service from a plurality of said UE, provides said PS service to said plurality of UE by way of a common IPsec tunnel.

8. The communication system according to claim 7, wherein:
said service control apparatus acquires subscriber information of said UE from an HLR (Home Location Register) that manages subscriber information for providing said PS service and registers said subscriber information in a VLR (Visitor Location Register) that is present in said IMS network.

9. The communication system according to claim 7 or 8, wherein:
said service control apparatus is a relay apparatus that relays messages between said femtocell base station and a core side.

10. A control method of a service control apparatus that provides a PS (Packet Switching) service to UE (User Equipment) that are present within a communication area created by a femtocell base station in an IMS (IP Multimedia subsystem) network, comprising:
establishing IPsec (Security Architecture for Internet Protocol) tunnels with said femtocell base station; and
when there are requests for provision of said PS service from a plurality of said UE, providing said PS service to said plurality of UE by way of a common IPsec tunnel.

11. A control method of a femtocell base station that creates a communication area in an IMS (IP Multimedia subsystem) network, comprising:
establishing IPsec tunnels with a service control apparatus that provides a PS (Packet Switching) service to UE (User Equipment) that are present within said communication area; and
when there are requests for provision of said PS service from a plurality of said UE, transmitting and receiving messages that correspond to the provision of said PS service to said plurality of UE to and from said service control apparatus by way of a common IPsec tunnel.

12. A program that causes a computer to execute:
a process of establishing IPsec tunnels between a femtocell base station that creates a communication area in an IMS (IP Multimedia subsystem) network and a service control apparatus that provides a PS service to UE that are present within said communication area; and
a process of, when there are requests for provision of said PS service from a plurality of said UE, providing said PS service to said plurality of UE by way of a common IPsec tunnel.
